# EUROPEAN PATENT APPLICATION

(11) **EP 2 835 564 A1**
(43) Date of publication of application: **11.02.2015**
(21) Application number: 14179816.5
(22) Date of filing: 05.08.2014
(51) Int. Cl.: F16K 11/02

(54) **Valve device for the cleaning of industrial filters**

(30) Priority: 07.08.2013 IT MO20130233
(71) Applicant: Trimec S.r.l., 20090 Cesano Boscone (MI) (IT)
(72) Inventor: Zanoni, Massimiliano, 20090 Cesano Boscone (MI) (IT)
(74) Representative: Grana, Daniele

(57) **Abstract**

Valve device (1) for the cleaning of industrial filters having filtering elements and nozzles for conveying compressed air into filtering elements, comprises a main body (2) comprising an inlet mouth (3) that can be coupled to a source of compressed air (5) and an outlet chamber (16, 38) to allow the outflow of the compressed air from the body (2), an elastic membrane (6), mounted in said body (2) and movable between a closing position, in which it tightly separates the inlet mouth (3) from the outlet chamber (16, 38), and an opening position, in which it allows the flow of compressed air from the inlet mouth (3) to the outlet chamber (16, 38), actuator means (7) to move the membrane (6) between the closing position and the opening position, and split up means (12, 13, 14) to put in communication the outlet chamber (16, 38) with a plurality of nozzles.

## Description

The present invention relates to a valve device for the cleaning of industrial filters.

In the industrial field, the use is known of dust suppression systems for air purification, sometimes simply called "industrial filters."

These systems allow for the filtration of dirty air suctioned by a plant, retaining the dust by means of filtering elements.

The filtering elements are made of either so-called "sleeves" or so-called "cartridges".

The sleeves are fabric filters, i.e. they are made of a material consisting of twisted threads having a weft and a warp.

In detail, the material composing these sleeves has a permeability such as to allow for the passage of gas and the retention of dust and particulate.

As a rule, the sleeves are shaped like cylindrical bags, whose volume is maintained by a metal wire frame, called "basket".

They are arranged within the mentioned systems, side by side, in a plurality of rows.

The cartridges, on the other hand, consist of a rigid filtering material and suitably shaped.

A plurality of cleaning devices of the filtering elements are mounted on the industrial filters, able to intervene periodically for the detachment of the retained dust from the filtering elements.

These cleaning devices employ, for cleaning purposes, the injection of compressed air inside the filtering elements.

In particular, the injection of air is subjected to the action of valves (usually, solenoid valves) included in the cleaning devices, which valves are connected to a compressed air accumulation tank.

The injected compressed air operates in the opposite direction with respect to the normal flow of intake air to be purified and causes a shaking or vibration of the filtering elements, leading to the precipitation of dust deposited on the outer surface of the filtering elements themselves.

The precipitated dust is then collected to be recovered or disposed of.

The known valves comprise a main body having both an air inlet mouth, connected to the tank, and an air outlet mouth.

In detail, the outlet mouth is directly connected to the so-called "nozzle" of the filtering system, i.e. the tube which distributes compressed air to different filtering elements arranged in the same row, through several jets.

The known valves also include a membrane made of deformable material, arranged between the inlet mouth and the outlet mouth.

The membrane is movable between a closing position, in which it prevents the flow of compressed air from the inlet mouth to the outlet mouth, and an opening position, in which it allows the flow of air.

This type of cleaning devices is effective in removing dust from the filtering elements; however, it is rather expensive.

In fact, for each row of filtering elements, it is necessary to provide for the use of a respective cleaning device; each device requires a relative wiring for the operation of the solenoid valves, to which corresponds the respective output of the electronic board that controls such operation.

The main aim of the present invention is to provide a valve device for the cleaning of industrial filters, the use of which, cleaning effectiveness being equal, is cheaper than that of known valves.

Within this aim, one object of the present invention is to provide a valve device for the cleaning of industrial filters that can be implemented on industrial filters of different construction, whose rows of filtering elements are spaced apart from one another with different pitches.

Another object of the present invention is to provide a valve device for the cleaning of industrial filters which can overcome the above mentioned drawbacks of the prior art in the ambit of a simple, rational, easy and effective to use solution.

The above mentioned objects are achieved by the present valve device for the cleaning of industrial filters, made according to claim 1.

Other characteristics and advantages of the present invention will become better evident from the description of some preferred but not exclusive embodiments, of a valve device for the cleaning of industrial filters, illustrated by way of an indicative, but not limitative example in the accompanying drawings in which:
Figure 1 is a front view in longitudinal section of the device according to the invention, according to a first embodiment;
Figure 2 is an axonometric exploded view of the device according to the invention, according to the first embodiment;
Figure 3 is a partially cutaway and exploded view of the device according to the invention, according to the first embodiment;
Figure 4 is an axonometric view of the device according to the invention, according to the first embodiment;
Figure 5 is a front view of the device according to the invention, according to the first embodiment;
Figure 6 is a front view of the device according to the invention, according to a second embodiment;
Figure 7 is a vertical section view of the previous figure;
Figures 8 and 9 are axonometric views of the device according to the invention, according to the second embodiment, which show particular features of the device itself.

With particular reference to these figures, globally indicated by 1 is a valve device for the cleaning of industrial filters which have a plurality of filtering elements and a plurality of distribution nozzles to convey compressed air into the filtering elements.

In practice, as already explained in the description of the prior art, every industrial filter comprises several rows of filtering elements, e.g. arranged vertically.

The rows are placed side by side to define a kind of matrix of filtering elements. Each nozzle is intended for cleaning of a row of filtering elements, and for this purpose, it may be placed above the row, parallel to the same.

The cleaning of the filtering elements is carried out thanks to the provision of a plurality of outlet jets for compressed air, obtained in each nozzle, one for each filtering element.

In detail, each jet may be arranged aligned with the axis of the respective element.

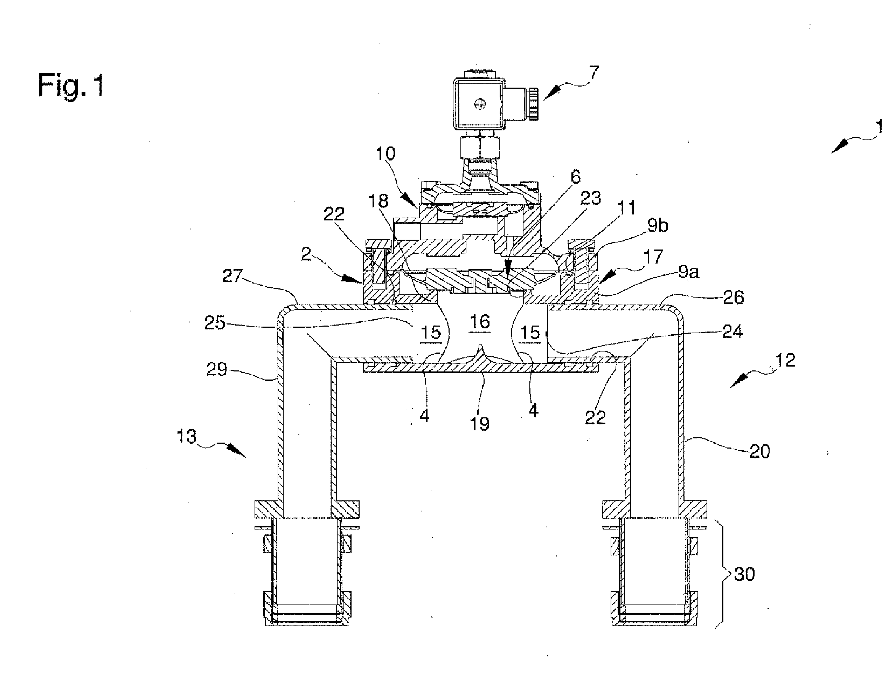

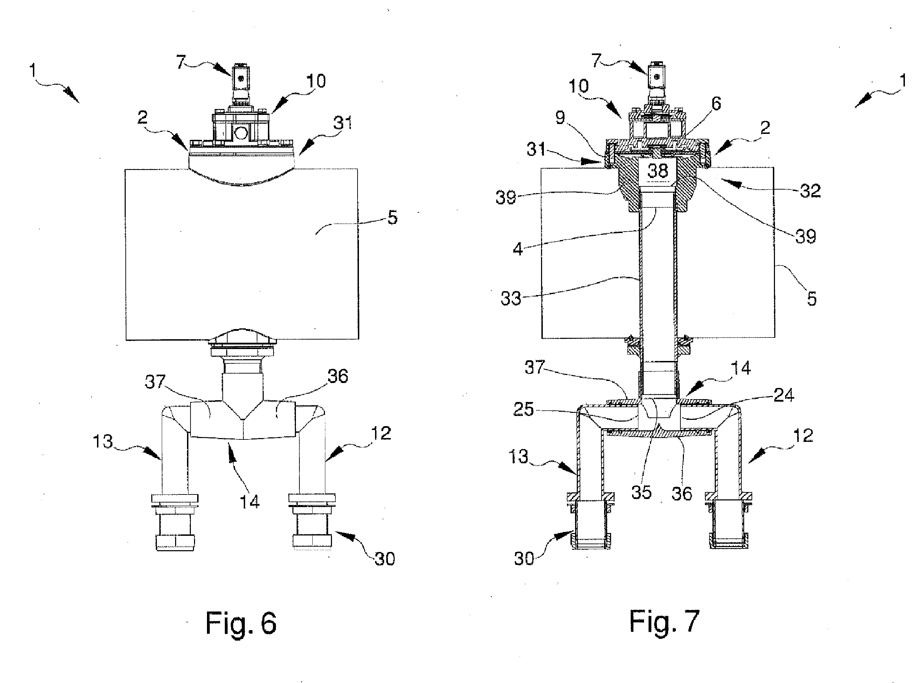

The invention will be illustrated in the present description by reference to its two main embodiments, one of which is shown in Figures 1-5, while the other is shown in Figures 6 - 9.

Before describing the respective peculiar aspects of these two embodiments, the more general aspects of the proposed device 1 are explained below.

The device 1 first comprises a main body 2, preferably made in a single body piece and in metal, which in turn comprises at least an inlet mouth 3 and at least an outlet mouth 4.

In detail, the device comprises at least an outlet chamber 16, 38 having said outlet mouth 4.

The inlet mouth 3 can be coupled to a compressed air tank 5, or to another source of compressed air, for the entry of compressed air into the main body 2. The outlet chamber 16, 38 allows, by means of its outlet mouth 4, the outflow from the body 2 of the compressed air entered through said inlet mouth 3.

The proposed device 1 comprises an elastic membrane 6, preferably of deformable plastic material, mounted in the main body 2.

In detail, the membrane 6 is arranged in intermediate position along a fluid-dynamic path that starts from the inlet mouth (or mouths) 3 and ends up into the outlet mouth (or mouths) 4.

The membrane 6, as shown e.g. in Figure 6, may have a disk shape.

The membrane 6 is movable between a closing position, in which it tightly separates the outlet chamber 16, 38 from the inlet mouth 3, and an opening position, in which it allows the flow of compressed air from the inlet mouth 3 to the outlet chamber 16, 38, from which it flows out through the outlet mouth 4. Furthermore, the invention includes actuator means 7, preferably electrically operated, which move the membrane 6 between the closing position and the opening position.

In both embodiments of the invention discussed in the present description, the main body 2 preferably comprises a top access 8 to an inner cavity formed in the body 2.

At the edge of the access 8, the body 2 can shape a joining neck 9a able to fasten to an annular flange 9b shaped by a cover 10, having a housing 13 for the actuator means 7.

The actuator means 7 may be of known type, and are e.g. subject to a control unit via a suitable wiring.

In detail, the membrane 6 closes the mentioned access 8 and is arranged between the neck 9a and the flange 9b, in such a way that, as a result of the fastening of one to the other, a peripheral portion 11 of the membrane 6 is closed like a sandwich between the two, so as to fasten the membrane 6 itself to the body 2, while maintaining at the same time movable a central portion 6a of the membrane 6 itself.

In this case, the central portion 6a is the portion of the membrane 6 able to move between the closing position and the opening position, as a result of the activation of the actuator means 7.

In fact, the central portion 6a is preferably more rigid than a flexible median adjacent portion, that is positioned between the peripheral portion 11, which is fixed, and the central one, which must move.

In detail, the actuator means 7 may comprise pneumatic means able to produce a vacuum in an inner chamber obtained between the membrane 6 and the cover 10, so as to move the central portion 6a of the membrane 6 towards the pneumatic means, said central portion 6a elastically returning to its initial position following the end of vacuum.

The shifting mode of the membrane 6 between the closing position and the opening one, will be better detailed in the description of the operation of the invention.

According to a very important aspect of the invention, the proposed device 1 includes split up means 12, 13, 14 to put in communication the outlet chamber 16, 38 of the main body 2 with a plurality of distribution nozzles.

In practice, by using the split up means 12, 13, 14, the device 1 is able to adjust the pressurized air supply of several distribution nozzles and, therefore, is able to clean simultaneously a plurality of rows of filtering elements.

In this manner, since a single valve device 1 adjusts the activation and interruption of the cleaning cycles of several rows of filtering elements, a proportional reduction in electrical wiring and outlet ports of the control unit can be obtained.

Preferably, the split up means comprise a plurality of split up pipes 12, 13, e.g. two, as shown in the attached drawings.

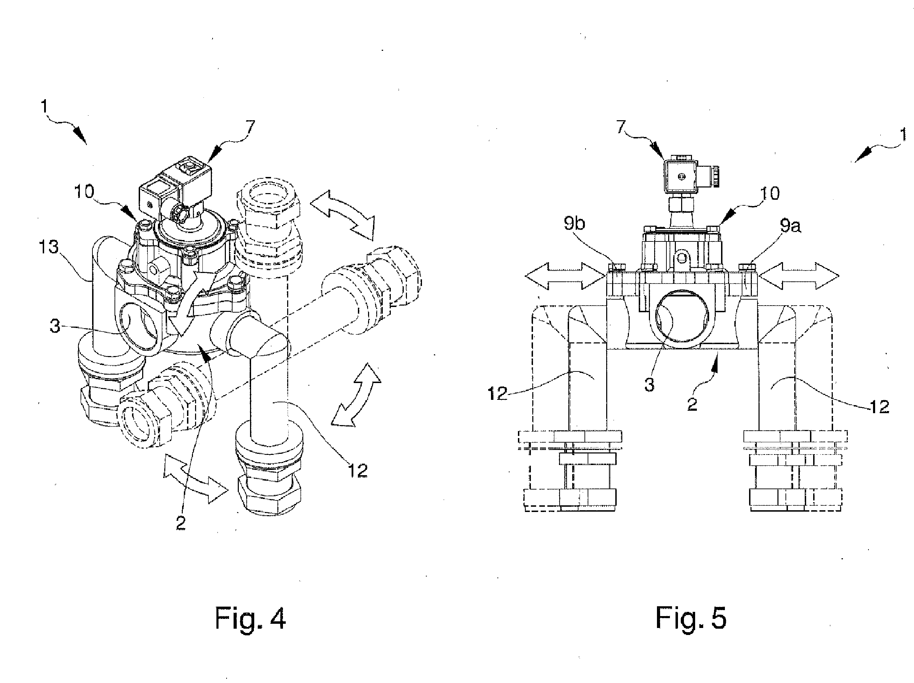

The split up pipes 12, 13 may rotate with respect to the body 2 and/or reciprocally movable (see Figures 4, 5, 8 and 9), so as to vary the distance thereof.

The purpose of such devices, whose constructive details will be explained together with the features of the two embodiments, is to make the proposed device 1 suitable to different models of industrial filters.

In detail, the possibility of varying the mutual distance of the split up pipes 12, 13 allows to fit the device 1 of the invention on industrial filters with a different "pitch", namely filters that differ in the distance between adjacent rows of their filtering elements.

Therefore, the proposed device 1 can be mounted on industrial filters of different construction, despite the fact that it is able by itself to clean several rows of filtering elements.

The fact that the split up pipes 12, 13 are rotatable allows to mount the device 1 in the most convenient position with respect to the tank 5 or to the filter and to adjust the direction of pipes 12, 13 so that they connect in any case to the nozzles.

Below, the first embodiment of the invention is described, with the aid of Figures 1-5.

In this embodiment, the device 1 may have a single inlet mouth 3 but has a plurality of outlet mouths 4, each one placed in fluid-dynamic communication with a respective split up pipe 12, 13.

Preferably, the split up pipes 12, 13 are fitted directly on the main body 2, as shown in the accompanying figures.

In detail, in this first embodiment, the device 1 may comprise an inlet chamber 15, in which the inlet mouth 3 is provided, and an outlet chamber 16, in which a plurality of outlet mouths are provided which, in the example shown, are two in number.

In detail, in this embodiment, the outlet chamber 16 is contained within the inlet chamber 15 and both are obtained within the cavity of body 2.

The body 2 may further comprise outer walls 17, which enclose the aforementioned cavity, in which the inlet mouth 3 is provided, and separation inner walls 18, contained within said outer walls 17, in which inner walls 18 the outlet mouths 4 (see figure 1) are obtained.

The inner walls 18 surround the outlet chamber 16 and separate it laterally from the inlet chamber 15, the latter being defined between the outer walls 17 and the inner ones.

In detail, the outer walls 17 are the side walls of the body 2 and, together with its bottom 19, which closes the bottom of the cavity, and together with said access 8, define a substantially cup-like shape of the main body 2.

The bottom 19 is a wall common both to the inlet chamber 15 and to the outlet chamber 16.

Both the outer walls 17 and the inner ones have a generally annular shape, and in any case, are built around a central axis, which is preferably common. Preferably, the inner walls 18 are surrounded by the outer ones and are centered with respect to the common central axis, so that the outlet chamber 16 is at the center of the inlet chamber 15.

In this case, the outlet chamber 16 is substantially cylindrical, while the inlet chamber 15 is substantially annular.

The main body 2 can shape a plurality of outlet sleeves 20, 21, e.g. two in number, as shown in the illustrations, each one tightly connected to a respective outlet mouth 4 and at the same time connected to one of the split up pipes 12, 13.

The outlet sleeves 20, 21 cross the inlet chamber 15 and join the inner walls 18 to the outer ones, providing a passage between the outlet chamber 16 and the split up pipes 12, 13.

In detail, the sleeves 20, 21 can be made in a single body piece with the inner and outer walls 17, 18, and can be coaxial.

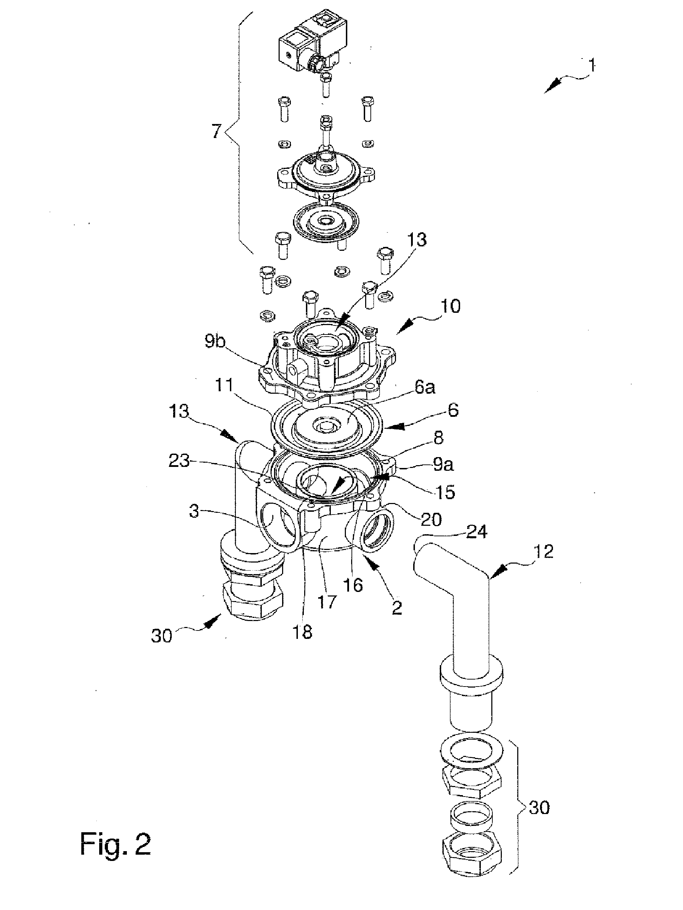

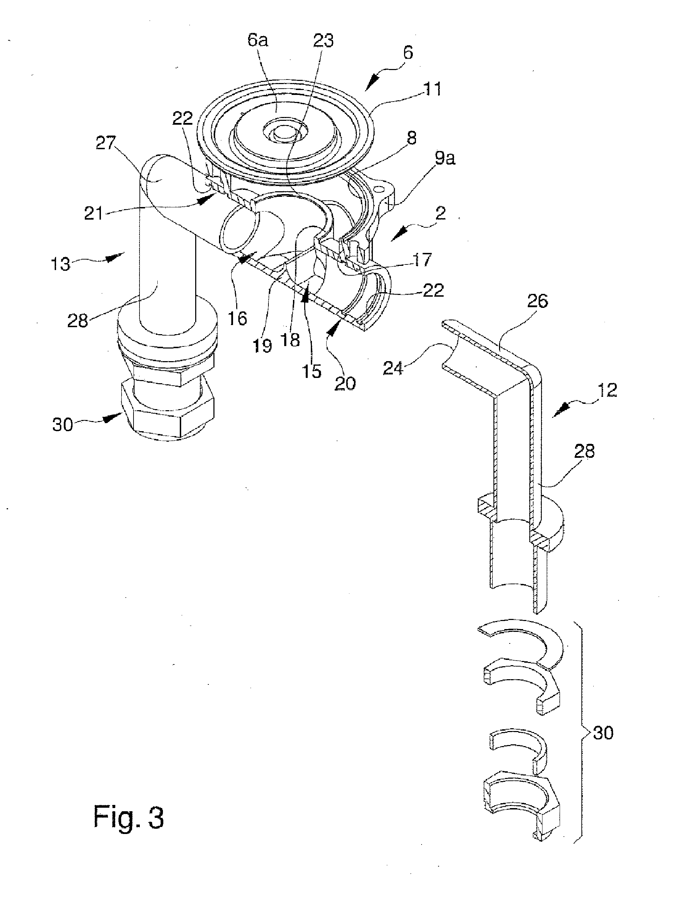

Preferably, as clearly shown in Figures 2 and 3, the split up pipes 12, 13 are fitted in an extractable manner into the respective sleeves 20, 21.

In detail, these pipes 12, 13 may comprise L-shaped tubes 12, 13, the proximal end 24, 25 of which is, in use, accommodated within the respective sleeve 20, 21.

To be precise, as shown in Figures 2 and 3, the tubes introduced in the previous paragraph, may include a coaxial length 26, 27 to the sleeves 20, 21 and an orthogonal length 28, 29.

As shown in figure 4, the split up pipes 12, 13 may be able to rotate by a round angle around the axis of the sleeves 20, 21, so as to allow the installation advantages already discussed above.

Figure 5 shows the fact that the split up pipes 12, 13 may be able to vary the mutual distance thereof, by translating individually along the axis of the sleeves 20,21.

On the inner surface of each sleeve 20, 21 one or more annular grooves 22 may be formed to accommodate seals, such as O-rings and the like.

At the distal ends of the split up pipes 12, 13 may be provided tightening ring nuts and sealing elements, indicated as a whole by 30 in the attached illustrations.

In the inner walls 18 of the main body 2 a communication passage 23 may be afforded for the fluid-dynamic communication between the inlet chamber 15 and the outlet chamber 16.

In this case, as may be clearly deduced from Figures 1, 2 and 3, the membrane 6 is fitted in the main body 2 so that, in the closing position, it plugs tightly the passage 23.

In detail, the communication passage 23 is alternately plugged and unplugged by the above-mentioned central portion 6a of membrane 6.

The operation of the device 1 of the first embodiment is the following.

Before each cleaning cycle, the membrane 6 (in detail, its central portion 6a) is in the closing position, in which it prevents communication between the inlet and outlet chambers 15, 16.

Therefore, the compressed air supplied by said source to the outlet chamber 15 through the inlet mouth 3 can not cross the mentioned communication passage 23.

When the control unit orders a cleaning cycle of the filtering elements, it sends a signal to the actuator means 7, which develop a vacuum sufficient to lift the membrane 6, bringing it to the opening position, in which it frees the path of communication between inlet chamber 15 and outlet chamber 16, for the exit of compressed air from the split up pipes 12, 13.

By so doing, during the operating period of the actuator means 7, a path of fluid-dynamic communication is defined between the tank 5, or other source, and (at least) two nozzles, so as to clean simultaneously (at least) two rows of filtering elements.

At the end of the cleaning cycle, the control unit de-activates the actuator means 7 and, due to its elastic properties, the membrane 6 returns to the closing position.

The second embodiment of the invention is described below with the aid of Figures 6 - 9.

In this embodiment, the device 1 is of the type integrated to the compressed air tank 5.

In detail, the main body 2 comprises an upper and outer portion 31 that includes the aforesaid joining neck 9a.

Therefore, the cover 10 and the actuator means 7 are arranged outside of the tank 5.

Moreover, the body 2 includes an inner portion 32, located within the tank 5, which has a plurality of inlet mouths, placed in direct communication with the inside of tank 5.

In this inner portion 32 is also included the outlet mouth 4 of the outlet chamber 38.

The outlet chamber 38 is tightly connected to a crossing pipe 33.

This pipe is also called "firing pipe" 33, and is mounted directly on the main body 2, at the outlet mouth 4.

The firing pipe 33 crosses, from side to side, internally, the tank 5 (see Fig. 6), and is placed in fluid-dynamic communication with the split up pipes 12, 13, located outside of the tank 5 itself.

Preferably, the proposed device 1 also comprises a T-joint 14 which connects the firing pipe 33 to the two split up pipes 12, 13.

In detail, the T-joint 14 is mounted on one part of the firing pipe outside of the tank 5 and opposite to said outer portion 31 of the main body 2.

In detail, the T-joint 14 houses both the distal end 35 of the firing pipe 33 and the proximal end of the split up pipes 12, 13.

The split up pipes 12, 13 may comprise the aforementioned L-shaped tubes, already described in detail when describing the first embodiment.

Even more in detail, the T-joint 14 shapes two coaxial sleeves 36, 37 in which the aforementioned L-shaped tubes 12, 13 are fitted in a removable manner.

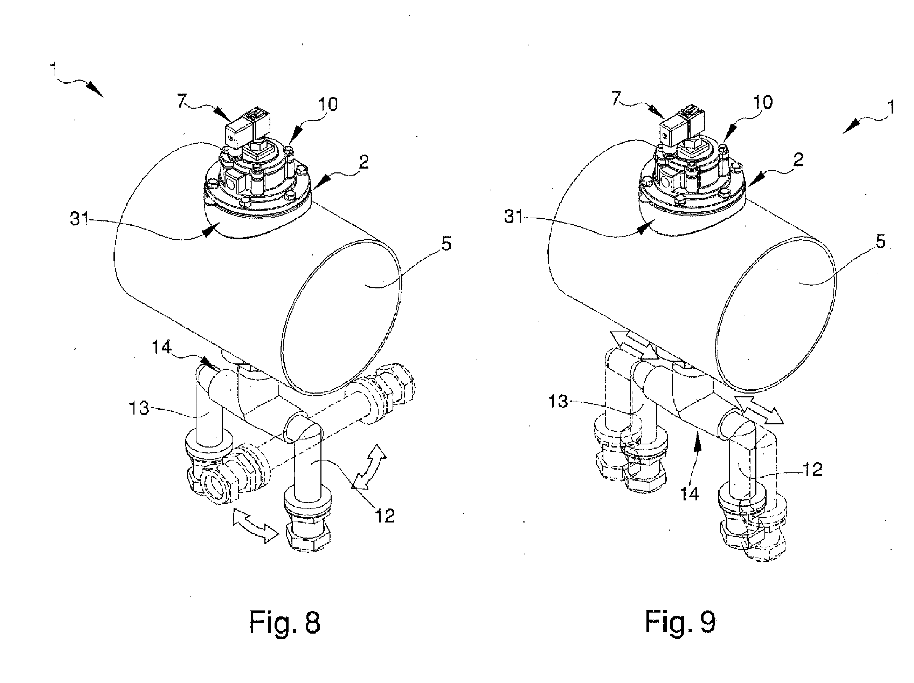

As shown in Figures 8 and 9, the split up pipes 12, 13 can rotate around the axis of the sleeves, and may vary their mutual distance, by translating individually along the axis of the sleeves.

On the inner surface of each sleeve 36, 37 one or more annular grooves 22 may be formed to accommodate seals.

Also in this second embodiment, at the distal ends of the split up pipes 12, 13, the tightening ring nuts and sealing elements 30 may be provided, which have been mentioned in relation to the first embodiment.

The body 2 comprises one or more inner walls which separate the inner outlet chamber 38, preferably of tubular shape, from a plurality of inlet mouths.

The outlet chamber 38 is preferably central to the body 2 and coaxial to it.

The inlet mouths may be arranged radially with respect to the central axis of the body 2 and alternated by ribs 38 or the like.

The proximal end 39 of the firing pipe 33 is fitted into the outlet chamber 38. Also in this embodiment, the outlet chamber 38 is connected, via a communication passage 23, to the inlet mouth 3, the aforementioned membrane 6 being mounted in the body 2 in such a way that, in its closing position, it plugs tightly the passage 23.

In the second embodiment, there are preferably several inlet mouths, but the outlet mouth 4 may also be only one, since the branch is carried out outside of the tank 5.

The operation of the valve device 1 of the second embodiment is the same of that of the first embodiment, *mutatis mutandis*.

In practice it has been found how the described invention achieves the intended objects and in particular the fact is underlined that it provides a valve device 1 for the cleaning of industrial filters whose implementation is flexible and particularly inexpensive.

## Claims

1. Valve device (1) for the cleaning of industrial filters having filtering elements and nozzles for conveying compressed air into filtering elements, said device (1) comprising:
a main body (2) comprising at least an inlet mouth (3) that can be coupled to a source of compressed air (5) and at least an outlet chamber (16, 38) to allow the outflow of said compressed air from said body (2);
at least an elastic membrane (6), mounted in said body (2) and movable between a closing position, in which it tightly separates said inlet mouth (3) from said outlet chamber (16, 38), and an opening position, in which it allows the flow of compressed air from said inlet mouth (3) to said outlet chamber (16, 38); and
actuator means (7) to move said membrane (6) between said closing position and said opening position;
**characterized by** the fact that it comprises split up means (12, 13, 14) to put in communication said outlet chamber (16, 38) with a plurality of said nozzles.

2. Device (1) according to claim 1, **characterized by** the fact that said split up means comprise a plurality of split up pipes (12, 13).

3. Device (1) according to claim 2, **characterized by** the fact that said pipes (12, 13) are fitted on said body (2).

4. Device (1) according to one or more of the preceding claims, **characterized by** the fact that it comprises an inlet chamber (15), in which said inlet mouth (3) is provided, and a plurality of outlet mouths (4) provided on said outlet chamber (16), the latter being contained within said inlet chamber (15).

5. Device (1) according to claim 4, **characterized by** the fact that said body (2) comprises: outer walls (17), in which said inlet mouth (3) is provided and separation inner walls (18), contained within said outer walls (17) and having said plurality of outlet mouths (4), said inner walls (18) surrounding said outlet chamber (16) and separating it from said inlet chamber (15).

6. Device (1) according to claim 3 and claim 5, **characterized by** the fact that said body (2) comprises a plurality of outlet sleeves (20, 21), each tightly connected to a respective outlet mouth (4) and connected to one of said split up pipes (12, 13).

7. Device (1) according to claim 5 or claim 6, **characterized by** the fact that in said inner walls (18) a passage (23) is afforded for the fluid-dynamic communication between said inlet chamber (15) and said outlet chamber (16), and by the fact that said membrane (6) is fitted in said body (2) so that, in its closing position, it plugs tightly said passage (23).

8. Device (1) according to claim 2, **characterized by** the fact that it is embedded in a tank (5) for compressed air and by the fact that it comprises a crossing pipe (33), communicating with said outlet chamber (38), which crosses said tank (5) from side to side, wherein said split up pipes (12, 13) are placed in fluid-dynamic communication with said crossing pipe (33).

9. Device (1) according to claim 8, **characterized by** the fact that said split up means comprise a T-joint (14) which connects said inner pipe with said split up pipes (12, 13).

10. Device (1) according to claim 8 or claim 9, **characterized by** the fact that said outlet chamber (38) has an outlet mouth (4) connected to said crossing pipe (38) and by the fact that said body (2) comprises one or more inner walls that separate said outlet chamber (38) from said inlet mouths.

11. Device (1) according to claim 10, **characterized by** the fact that said outlet chamber (38) has a passage (23) for the fluid-dynamic communication between said inlet mouth and said outlet chamber itself (38), and by the fact that said membrane (6) is fitted in said body (2) in such a way that, in its closing position, it plugs tightly said passage (23).

12. Device (1) according to one or more of the claims from 2 to 11, **characterized by** the fact that said split up pipes (12, 13) are able to rotate with respect to said body (2).

13. Device (1) according to one or more of the claims from 2 to 12, **characterized by** the fact that said split up pipes (12, 13) are reciprocally movable.
